Europäisches Patentamt

European Patent Office

Office européen des brevets

(19)

(11) Numéro de publication : **0 286 507 B1**

(12) **FASCICULE DE BREVET EUROPEEN**

(45) Date de publication du fascicule du brevet :
21.08.91 Bulletin 91/34

(51) Int. Cl.⁵ : **B01J 29/18, B01D 53/36**

(21) Numéro de dépôt : 88400752.7

(22) Date de dépôt : 29.03.88

(54) **Procédé d'épuration des effluents gazeux oxygénées par un réduction sélective des oxydes d'azote.**

(30) Priorité : 03.04.87 FR 8704718
28.10.87 FR 8714911

(43) Date de publication de la demande :
12.10.88 Bulletin 88/41

(45) Mention de la délivrance du brevet :
21.08.91 Bulletin 91/34

(84) Etats contractants désignés :
BE DE FR GB IT NL

(56) Documents cités :
DE-C- 3 642 018
FR-A- 1 556 708
FR-A- 2 197 815
FR-A- 2 248 314
FR-A- 2 586 674
US-A- 4 052 337
US-A- 4 473 535
PATENT ABSTRACTS OF JAPAN, vol. 11, no.
326 (C-454)[2773], 23 octobre 1987, page 2773
C 454; & JP-A-62 114 657 (BABCOCK HITACHI
K.K.) 26-05-1987

(56) Documents cités :
CHEMICAL ABSTRACTS, vol. 84, no. 22, 31 mai
1976, page 319, résumé no. 155159s, Columbus, Ohio, US; & JP-A-76 11 063 (TORAY
INDUSTRIES, INC.) 28-01-1976
CHEMIE INGENIEUR TECHNIK, vol. 55, no. 2,
février 1983, pages 148-149, Verlag Chemie
GmbH, Weinheim, DE; E. HÄFELE et al.:
"Wissenschaftliche Forschungsarbeit"

(73) Titulaire : SOCIETE CHIMIQUE DE LA
GRANDE PAROISSE
Tour Aurore - Place des Reflets
F-92080 La Défense 2 Cédex 5 Paris la
Défense (FR)

(72) Inventeur : Hamon, Christian
47, chemin des Dames
F-44600 Saint-Nazaire (FR)
Inventeur : Le Goff, Yannick
99, avenue de Plaisance
F-44600 Saint-Nazaire (FR)

(74) Mandataire : Rieux, Michel
ATOCHEM Département Propriété Industrielle
4, Cours Michelet - La Défense 10 - Cedex 42
F-92091 Paris-La Défense (FR)

## Description

La présente invention concerne l'épuration des effluents gazeux oxygénés pollués par des oxydes d'azote.

Les gaz résiduaires provenant de la fabrication d'acide nitrique, d'installations de décapage de métaux par les acides, de la décomposition thermique des nitrates, etc... contiennent une concentration élevée en oxydes d'azote $NO_x$, composés polluants du fait de leur action corrosive et de la contamination de l'aire qu'ils occasionnent.

Pour lutter contre la pollution industrielle, il est nécessaire d'avoir les moyens d'éliminer les rejets toxiques, entre autres les oxydes d'azote produits dans les combustions de toutes origines.

On sait, depuis plusieurs décennies, notamment par l'enseignement du brevet allemand n° 1.088.938, que l'oxygène est éliminé au cours de la réduction catalytique des oxydes d'azote avec des combustibles. Avec ce procédé, la consommation de combustibles est élevée et la forte quantité de chaleur dégagée provoque une dégradation accélérée du catalyseur et une perte de son activité.

Il a été proposé de soumettre les effluents gazeux oxygénés contenant des oxydes d'azote à une réaction sélective avec de l'ammoniac, la présence d'oxygène n'étant pas gênante dans ce type de réduction. Selon le brevet français 1.205.311, cette réaction est catalysée par des métaux du groupe du platine ou des métaux du groupe du fer selon le brevet français 1.233.712. Cependant, ces catalyseurs tels que décrits, après une certaine période d'utilisation, subissent en présence d'ammoniac et de dioxyde d'azote $NO_2$, une altération entraînant une diminution de leur efficacité catalytique.

En outre, il est connu de soumettre les effluents gazeux oxygénés contenant les oxydes d'azote à une réduction sélective en présence de pentoxyde de vanadium déposé sur alumine, notamment par le brevet français 1.412.713. Toutefois, les catalyseurs comprenant comme constituant actif des oxydes de métaux de transition ne favorisent pas la réduction d'hémioxyde d'azote ($N_2O$).

Dans le domaine technique de l'épuration des effluents gazeux pollués par des oxydes d'azote, par réduction sélective par l'ammoniac, des dits oxydes, conduisant à des produits non polluants azote et eau, le brevet français 2.413.128 décrit des compositions catalytiques contenant comme éléments actifs du fer et du chrome sous forme d'oxydes associés à de l'alumine et à au moins un promoteur choisi parmi les oxydes de terres rares seul ou en combinaison et les métaux de la mine de platine. Ces catalyseurs sont applicables avec des résultats satisfaisants dans un procédé d'épuration à une température comprise entre 120 et 350°C.

Il était souhaitable d'étendre vers des températures plus élevées, la zone de mise en oeuvre du procédé de réduction des oxydes d'azote. En effet, dans de nombreux cas les effluents à traiter ont une température supérieur à 300°C ; et il convenait d'éviter le recours à des échangeurs de température pour refroidir puis réchauffer les gaz, en vue de réaliser un gain d'investissement et une économie de fonctionnement.

De plus, le fait de conduire la réduction sélective par de l'ammoniac à plus haute température rend possible l'épuration d'effluents contenant, outre les oxydes d'azote, des oxydes de soufre ; ces derniers ne se combinant pas, à ce niveau de température, à l'ammoniac pour former du sulfate d'ammonium qui provoque une désactivation du catalyseur.

La demande de brevet français 2.568.789 a proposé un procédé de réduction — dénitration par l'ammoniac de gaz résiduaires en présence d'une zéolite du type à substitution par l'hydrogène et/ou le fer, à une vitesse surfacique de 5m/h ou moins et avec un rapport de la concentration en ammoniac $NH_3$ à la concentration en dioxyde d'azote $NO_2$ de 1,3 ou plus, en particulier de 1,6 ou plus.

Le catalyseur semblant n'avoir été testé qu'à l'échelle laboratoire, est préparé par immersion d'une zéolite naturelle ou synthétique dans l'acide chlorhydrique, une solution aqueuse de chlorure ferrique ou une solution aqueuse de nitrate ferrique $Fe(NO_3)_3$, puis calcination à environ 500°C. Les essais ont été conduits en présence de mordénite à substitution par H, Fe obtenu en remplaçant 42% d'équivalent de Na, de K et de Ca contenu dans la mordénite par de l'hydrogène et 35% d'équivalent pour du fer.

Il a été recherché un catalyseur résistant permettant d'obtenir des performances d'épuration équivalentes dans des domaines d'application étendus, et à toutes teneurs en oxydes d'azote, en mettant en oeuvre un rapport $NH_3/NO_x$ inférieur, tout en conduisant la réaction de réduction des oxydes d'azote à température élevée, et à des vitesses volumétriques de circulation des gaz qui peuvent être élevées.

Selon l'invention, les compositions catalytiques de réduction sélective des oxydes d'azote contenus dans des effluents gazeux oxygénés, par l'ammoniac, contiennent comme matière active la mordénite sous forme ammonium ou acide de teneur en sodium résiduel inférieure à 1000 ppmp, (partie par million poids) dans une proportion comprise entre 70 et 95% du poids total de la composition catalytique, le complément étant constitué par un liant.

La mordénite de base se présente sous forme sodique et son activité catalytique est très faible dans la réduction des oxydes d'azote par l'ammoniac. La préparation des compositions catalytiques de l'invention fait appel à des techniques d'échange de la mordénite.

L'échange des ions sodium Na⁺ par des ions ammonium NH₄⁺ s'effectue par traitement de la mordénite sodique par une solution de nitrate d'ammonium dans un réacteur agité. Le taux d'échange est limité par la thermodynamique et la vitesse de réaction est fonction de la température du milieu. Dans le cas de la mordénite, la réaction est très rapide, en particulier, à une température voisine de 100°C, l'équilibre thermodynamique est atteint en moins de 10 minutes. Le traitement d'échange est effectué pendant une durée légèrement supérieur à 10 minutes à une température de l'ordre de 100°C. L'obtention d'une teneur très basse en sodium implique une élimination du sodium extrait, afin de déplacer l'équilibre thermodynamique.

Après la phase d'échange ionique, la mordénite partiellement échangée est séparée par filtration, puis soumise à une opération de lavage avec de l'eau déminéralisée.

Puis la mordénite partiellement échangée est soumise à un second traitement d'échange par une solution de nitrate d'ammonium, dans les mêmes conditions que précédemment, suivi d'une séparation par filtration et d'un lavage avec de l'eau déminéralisée.

Il a été constaté que deux cycles correspondant chacun à une séquence : échange — filtration — lavage sont suffisants pour abaisser la teneur en sodium en dessous de 1000 parties par million poids.

Ensuite, le produit obtenu est soumis à un séchage à une température de l'ordre de 120°C, pendant une durée de 10 à 20 heures, puis il est soumis à une opération de malaxage pendant quelques heures avec un liant.

Le liant utilisé est un élément du groupe constitué par l'argile kaolinite ($Si_2Al_2O_5 (OH)_4$), la bentonite, l'alumine, seul ou en combinaison.

La composition catalytique obtenue est conditionnée sous une forme adaptée, telle que des pastilles, ou de préférence des extrudés.

On procède alors à un séchage pendant quelques heures à une température comprise entre 100 et 120°C.

Puis pour obtenir la mordénite acide, on soumet le produit obtenu après le séchage précédent à un traitement thermique sous fort débit d'air sec, au minimum de 1 à 2 $Nm^3h^{-1}/l$ de catalyseur, en lit traversé, avec élévation progressive de la température de 50 à 100°C/h jusqu'à une température comprise entre 450 à 550°C, en maintenant à ce palier de température pendant 5 à 10 heures.

La surface spécifique mesurée selon la méthode BET, adsorption d'azote à la température de l'azote liquide- des compositions catalytiques sous forme acide est comprise entre 200 et 300 m²/g et le diamètre des macropores — mesuré au porosimètre à mercure — compris entre 4 et 1500 nm essentiellement.

Les compositions catalytiques de l'invention sont applicables avec grand succès dans un procédé d'épuration, en présence d'ammoniac, d'effluents gazeux oxygénés contenant des oxydes d'azote ($NO_x$) à une température comprise entre 300 et 550°C, sous une pression d'au moins 0,1 MPa absolu, avec une vitesse volumétrique horaire, de circulation des gaz VVH, qui peut être élevée jusqu'à 80.000 h⁻¹, et un rapport de la concentration en ammoniac à la concentration en oxydes d'azote $NH_3/NO_x$ au plus égal à 1,25.

Le procédé d'épuration peut être conduit en présence de mordénite selon l'invention, sous forme ammonium dans une zone de température de 300 à 375°C, ou sous forme acide dans une zone de 300 à 550°C.

L'augmentation de pression exerce une influence favorable sur l'activité des catalyseurs d'épuration, aussi le procédé de réduction des oxydes d'azote est conduit avantageusement à la pression la plus élevée possible ; on obtient des résultats très satisfaisants pour des pressions comprises entre 0,15 MPa et 1 MPa.

Le procédé de réduction des oxydes d'azote en présence de compositions catalytiques à base mordénite ammonium ou acide à teneur en sodium résiduel inférieur à 1000 ppmp, conduit à des performances et à des rendements d'épuration tout à fait remarquables avec des faibles quantités d'ammoniac ajoutées à l'effluent oxygéné à traiter par rapport à la teneur du dit effluent en oxydes d'azote. On peut obtenir des résultats très satisfaisants avec des rapports exprimés en moles $NH_3$/moles $NO_x$ compris entre 1,05 et 1,2 ; un rapport de 1,1 peut être avantageusement choisi.

Selon une variante, dans la composition catalytique comportant comme matière active de la mordénite échangée représentant 70 à 95% du poids total de la dite composition complétée par un liant, la mordénite est échangée par le cation cuivre.

La mordénite utilisée est la variété dite "petits pores" industriellement synthétisée. Cette forme est dite petits pores par opposition à la forme "larges pores" également synthétique. Dans les deux cas, il s'agit de la même structure, mais avec des propriétés d'adsorption différentes. La forme larges pores adsorbe le benzène (diamètre cinétique 6,6 $10^{-10}$ m), alors que la forme petits pores n'adsorbe que les molécules de diamètre cinétique inférieur à 4,4 $10^{-10}$ m environ. Ces deux types de zéolites se distinguent également par des différences morphologiques. La mordénite type "petits pores" cristallise en aiguilles, alors que la mordénite type "larges pores" cristallise en sphérulites.

La mordénite à petits pores, de formule élémentaire $Na_7((AlO_2)_7(SiO_2)_{40})$, $24H_{20}$, montre un rapport Si/Al mesuré par fluorescence X d'environ 6 ; la teneur en sodium qui résulte de ce rapport de charpente Si/AL est voisine de 5,2% en poids (par rapport au produit sec 1000°C). Le volume de la maille cristalline (système orthorhombique) est voisin de 2770 A$^3$.

Cette mordénite petits pores est synthétisée sous sa forme sodique et son activité catalytique, sous cette forme, comme celles d'autres zéolites sodiques est très faible.

Il a été constaté que la substitution par échange des ions sodium en totalité ou partiellement par le cation cuivre permet d'obtenir un catalyseur très performant pour la réduction catalytique par l'ammoniac des oxydes d'azote contenus dans des effluents gazeux oxygénés.

Cette composition catalytique contient comme matière active une mordénite dite à petits pores n'adsorbant que les molécules de diamètre cinétique inférieur à $4,4.10^{-10}$ m environ, et cristallisée en aiguilles, échangée par le cation cuivre, représentant entre 1 et 5% du poids total de ladite composition, le complément étant constitué par un liant.

La présence du cuivre, dans la mordénite échangée active, sous forme complexée par l'ammoniac $Cu(NH_3)_4^{2+}$, a été trouvée très avantageuse.

Le liant utilisé est un élément du groupe constitué par l'argile kaolinite $(Si_2Al_2O_5(OH)_4)$, la bentonite, l'alumine, seul ou en combinaison.

Les compositions catalytiques sont conditionnées sous une forme adaptée, telle que des pastilles ou des extrudés.

Ces compositions catalytiques peuvent être obtenues directement à partir de la forme sodique sans transformation préalable sous forme ammonium ou acide, cependant il a été constaté que l'activité catalytique se trouve renforcée si la forme ammonium est choisie comme produit de départ.

Le cation cuivre est introduit par échange avec les ions sodium $Na^+$ ou ammonium $NH_4^+$. Cette réaction d'échange peut s'effectuer sur la zéolite sous forme de poudre ou sur celle-ci après mise en forme avec un liant approprié.

Quand le produit de départ est constitué par de la mordénite à petits pores, en poudre, sous forme sodique ou ammonium, celle-ci est soumise à au moins deux cycles d'échange cationique par mise en contact avec une solution de cuivre tétramine, à température comprise entre 20 et 80°C, de préférence 40 à 60°C, suivie d'une séparation de la mordénite échangée par filtration et d'un lavage avec de l'eau déminéralisée, puis d'un séchage à température contrôlée de manière à obtenir le départ de l'eau dans les conditions les plus douces possibles, ensuite la matière active obtenue est mélangée avec un liant approprié, et la composition catalytique est mise en forme.

Quand la réaction d'échange est mise en oeuvre sur le produit conditionné, la poudre de mordénite à petits pores sous forme sodique ou ammonium est mélangée avec un liant approprié, après ajustement de l'humidité, mise en forme et séchage. Les produits préformés sont soumis à un traitement thermique entre 300 et 500°C, lesdits préformés sont ensuite soumis à au moins un traitement d'échange cationique par mise en contact avec une solution de cuivre tétramine, à température comprise entre 20 et 80°C, de préférence 40 à 60°C, suivi d'une séparation par filtration, d'un lavage avec de l'eau déminéralisée, puis d'un séchage de la composition catalytique à température contrôlée de manière à obtenir le départ de l'eau dans les conditions les plus douces possibles.

L'introduction du cation cuivre sous sa forme complexée par l'ammoniac $Cu(NH_3)_4^{2+}$, est obtenue par l'intermédiaire d'une solution de cuivre tétramine, résultant de la réaction du nitrate de cuivre et d'ammoniac.

Le taux d'échange entre les ions sodium $Na^+$ et ammonium $NH_4^+$ avec le cation cuivre $Cu^{++}$ peut être augmenté, soit en multipliant le nombre de cycles d'échange soit en élevant la température de cet échange.

On a constaté que l'échange de la mordénite dite petits pores par des ions cuivriques $Cu^{++}$ conduit à l'obtention de catalyseurs très remarquables.

Ces compositions catalytiques, sont applicables à l'épuration, en présence d'ammoniac, d'effluents gazeux oxygénés contenant des oxydes d'azote $(NO)_x$, à une température comprise entre 225 et 400°C, sous une pression d'au moins 0,1 MPa absolu avec une vitesse volumétrique horaire de circulation des gaz VVH, qui peut être très élevée et atteindre $80.000h^{-1}$, et un rapport de la concentration en ammoniac à la concentration en oxydes d'azote $NH_3/NO_x$ au plus égal à 1,25.

On obtient des rendements exceptionnels dans ce type d'épuration, avec des rapports molaires $NH_3/NO_x$ compris entre 1,05 et 1,2 ; un rapport de 1,15 peut être avantageusement choisi.

L'influence de la pression est comparable à celle observée avec la mordénite ammonium sans cations cuivre.

L'avantage des compositions catalytiques échangées au cuivre réside dans la conduite de l'opération d'épuration à basse température. On obtient des résultats très satisfaisants à 250°C, alors qu'il était nécessaire d'opérer au-dessus de 300°C avec les catalyseurs selon le brevet principal.

Les compositions catalytiques échangées au cuivre permettent de combiner des rendements d'épuration très élevés supérieurs à 98% avec des quantités d'ammoniac très proches de la stoechiométrie et surtout des teneurs, après réaction, en ammoniac résiduel, très faibles, ce qui représente un avantage indéniable pour ce type de catalyseur.

Le procédé d'épuration mis en oeuvre sur les compositions catalytiques de l'invention convient particulièrement bien à la dépollution des gaz de queue rejetés à l'atmosphère dans la fabrication de l'acide nitrique.

Le procédé est extrêmement souple, adapté à l'épuration des effluents gazeux à toutes teneurs en oxydes d'azote, y compris en présence d'oxydes de soufre. L'efficacité du procédé est remarquable même à des teneurs élevées en $NO_x$ de l'order de 20000 ppm et également aux faibles teneurs de l'ordre de 100 ppmV en oxydes d'azote.

Ces compositions catalytiques sont des produits industriels résistants ne subissant aucune détérioration mécanique, ni perte d'activité après de très longues périodes de fonctionnement.

Il est donné ci-après des exemples de préparation de la composition catalytique et de sa mise en oeuvre, qui illustrent l'invention à titre non limitatif.

## Exemple 1.

Préparation du catalyseur n° 1.

Dans un réacteur de 150 litres de volume utile, on introduit 100 litres de solution de nitrate d'ammonium à 300 grammes par litre et 25 kg, comptabilisés en matière sèche, de mordénite sodique à petits pores, de formule élémentaires $Na_7((AlO_2)_7(SiO_2)_{40})$, $24H_2O$, et de teneur initiale en sodium de 5,9% poids sur produit sec.

On agite la suspension pendant 15 minutes à 100°C. On récupère la mordénite par filtration sur un filtre à bande de 0,1 $m^2$ de surface filtrante et lave sur filtre avec 100 litres d'eau déminéralisée. A la sortie du filtre, la teneur en eau de la masse essorée est de 55% en poids. La teneur en sodium, sur matière sèche, de la mordénite est de 4000 ppmp.

La masse essorée est reprise et retraitée dans les mêmes conditions d'échange ionique, et de filtration. Après lavage avec 300 litres d'eau déminéralisée, afin d'éliminer la totalité du sodium extrait, on sèche le produit à 120°C dans une étuve pendant 10 heures. On obtient une poudre très pulvérulente dont la teneur en sodium résiduel est de 900 p.p.m.p. sur matière sèche.

Ensuite, on malaxe la poudre pendant quatre heures avec un liant composé de 75% poids d'argile kaolinite et 25% poids de bentonite, à raison de 20% en poids, sur matière sèche, rapporté au poids total.

On soumet le mélange obtenu à l'extrusion, et les extrudés de 4,8 millimètres de diamètre sont soumis à un séchage à 120°C pendant 3 heures.

## Exemple 2.

Cet exemple illustre la mise en oeuvre du catalyseur n° 1 sous forme ammonium, dans diverses conditions de fonctionnement, en utilisant les gaz de queue d'une unité industrielle d'acide nitrique. Les résultats sont consignés dans le tableau I ci-après.

Le procédé de réduction par l'ammoniac, des oxydes d'azote contenus dans les gaz de queue, est conduit sous une pression variant de 0,17 à 0,6 MPa absolus, à une température moyenne du lit catalytique de 325°C; la vitesse volumétrique horaire VVH exprime le débit de gaz entrant sur le catalyseur en Nl/h divisé par le volume du catalyseur.

La teneur en oxydes d'azote $NO_x$ est exprimée en ppmv (partie par million en volume) ; la teneur en $NO_x$ dans les gaz à l'entrée du catalyseur, exprimée en ppmv, est portée dans la colonne 1 du tableau ; le rendement de réduction, exprimé en %, correspondant au rapport de la différence entre la teneur en $NO_x$ des gaz en entrée et la teneur en $NO_x$ des gaz en sortie, à la teneur en $NO_x$ des gaz en entrée, est porté dans la colonne 6. La quantité d'ammoniac ajouté au gaz entrant exprimée en moles $NH_3$/moles $NO_x$ figure dans la colonne 5. La vitesse volumétrique horaire VVH est inscrite dans la colonne 4, la pression P, en MPa absolus, dans la colonne 3 et la température moyenne du lit catalytique T en °C dans la colonne 2.

EP 0 286 507 B1

TABLEAU I

| : NO$_x$ entrée : | T moyen: | P abs : | VVH : | NH$_3$ : | Rendement : |
|---|---|---|---|---|---|
| : ppmv : | °C : | MPa : | h$^{-1}$ : | NO$_x$ : | % : |
| : 1 500 : | 325 : | 0,17 : | 5000 : | 1,1 : | 98,2 : |
| : " : | " : | 0,17 : | 15000 : | 1,1 : | 92,9 : |
| : " : | " : | 0,3 : | 10000 : | 1,1 : | 98,2 : |
| : " : | " : | 0,3 : | 20000 : | 1,1 : | 95,8 : |
| : " : | " : | 0,45 : | 15000 : | 1,1 : | 97,7 : |
| : " : | " : | 0,45 : | 25000 : | 1,1 : | 94,4 : |
| : " : | " : | 0,6 : | 25000 : | 1,1 : | 96,8 : |
| : " : | " : | 0,6 : | 40000 : | 1,1 : | 95,1 : |
| : " : | " : | 0,6 : | 60000 : | 1,1 : | 90,5 : |
| : 3 500 : | 325 : | 0,25 : | 5000 : | 1,1 : | 98,4 : |
| : " : | " : | " : | 7500 : | " : | 98,1 : |
| : " : | " : | " : | 10000 : | " : | 97,1 : |
| : " : | " : | " : | 12500 : | " : | 95,5 : |
| : " : | " : | " : | 15000 : | " : | 93,2 : |

### Exemple 3.

On charge un échantillon du catalyseur n° 1 dans le réacteur d'essai, puis on le soumet à un traitement thermique sous air sec (en lit fixe traversé) à une vitesse horaire VVH 20.000 h$^{-1}$ avec élévation progressive de la température de 75°C par heure jusqu'à 500°C et on maintient ce palier de température pendant 10 heures.

La surface spécifique, mesurée selon la méthode BET, du catalyseur n° 2 sous forme acide est de 240 m$^2$/g, son volume macroporeux de 0,285 cm$^3$/g avec une répartition du diamètre des pores entre 4 et 500 nm (pour 98,9% du volume macroporeux) et son volume microporeux, déterminé par adsorption d'azote, de 0,25 cm$^3$/g.

Comme dans l'exemple précédent le catalyseur n° 2 est mis en oeuvre dans diverses conditions de fonctionnement, en utilisant les gaz de queue d'une unité industrielle d'acide nitrique.

Le procédé de réduction par l'ammoniac, des oxydes d'azote contenus dans les gaz de queue, est conduit sous une pression variant de 0,17 à 0,6 MPa absolus, à une température moyenne du lit catalytique de 450°C.

Les résultats consignés dans le tableau II ci-après ont été obtenus après plus de six mois de fonctionnement du catalyseur n° 2.

6

TABLEAU II

| NO$_x$ entrée | T moyen | P abs | VVH | NH$_3$ | Rendement |
|---|---|---|---|---|---|
| ppmv | °C | MPa | h$^{-1}$ | NO$_x$ | % |
| 1 500 | 450 | 0,17 | 5000 | 1,1 | 98,2 |
| " | " | 0,17 | 15000 | 1,1 | 95,3 |
| " | " | 0,3 | 10000 | 1,1 | 98,7 |
| " | " | 0,3 | 20000 | 1,1 | 97,7 |
| " | " | 0,45 | 15000 | 1,1 | 98,7 |
| " | " | 0,45 | 25000 | 1,1 | 98,2 |
| " | " | 0,45 | 40000 | 1,1 | 96,8 |
| " | " | 0,6 | 25000 | 1,1 | 98,8 |
| " | " | 0,6 | 40000 | 1,1 | 97,9 |
| " | " | 0,6 | 60000 | 1,1 | 93,7 |

Exemple 4.

Préparation des catalyseurs numéros 3, 4, 5 et 6.

On utilise la poudre obtenue lors de la fabrication du catalyseur n° 1. La poudre est ensuite malaxée pendant 4 heures avec un liant, à raison de 20% poids, sur matière sèche, rapportée au poids total.
La composition du liant est la suivante :

catalyseur 3 :      argile kaolinite 100% poids
catalyseur 4 :      argile kaolinite 40% poids-bentonite 60% poids
catalyseur 5 :      bentonite 100% poids
catalyseur 6 :      alumine Condea 100% poids

La mise en forme et le traitement thermique sont les mêmes que pour le catalyseur n° 2.
Les principales caractéristiques des compositions catalytiques numéros 3 à 6 sont reportées dans le tableau III ci-dessous.

## TABLEAU III

| : Catalyseur | : surface spécifique $m^2 g^{-1}$ (méthode BET): | : Volume Macro- poreux $cm^3 g^{-1}$ | : Diamètre des macropores A | : % volume macro- poreux entre 40 et 15000 A : |
|---|---|---|---|---|
| : 3 | : 260 | : 0,334 | : 37,5 - 15000 | : 98,0 : |
| : 4 | : 250 | : 0,252 | : 37,5 - 30000 | : 95,9 : |
| : 5 | : 283 | : 0,265 | : 37,5 - 40000 | : 89,1 : |
| : 6 | : 233 | : 0,303 | : 37,5 - 37500 | : 98,7 : |

## Exemple 5.

Cet exemple illustre la mise en oeuvre des catalyseurs numéros 3, 4, 5 et 6 dans deux conditions de fonctionnement, en utilisant les gaz de queue d'une unité industrielle d'acide nitrique, comme dans l'exemple 2. Les résultats sont consignés dans le tableau IV ci-après :

## TABLEAU IV

| : Catalyseur | : $NO_x$ entrée ppmv | : T moyen °C | : Pabs MPa | : VVH $h^{-1}$ | : $NH_3$ $NO_x$ | : Rendement % : |
|---|---|---|---|---|---|---|
| : 3 | : 1500 | : 450 | : 0,45 | : 15000 | : 1,1 | : 98,9 : |
| : | : " | : " | : " | : 25000 | : 1,1 | : 95,4 : |
| : 4 | : 1500 | : 450 | : 0,45 | : 15000 | : 1,1 | : 97,7 : |
| : | : " | : " | : " | : 25000 | : 1,1 | : 97,0 : |
| : 5 | : 1500 | : 450 | : 0,45 | : 15000 | : 1,1 | : 98,2 : |
| : | : " | : " | : " | : 25000 | : 1,1 | : 93,5 : |
| : 6 | : 1500 | : 450 | : 0,45 | : 15000 | : 1,1 | : 98,0 : |
| : | : " | : " | : " | : 25000 | : 1,1 | : 95,8 : |

## EXEMPLE 6

Catalyseur N° 7.

On mélange intimement 6,6 kg de mordénite sodique à petits pores précédemment caractérisée, avec 1,9 kg de gel d'alumine. Les pertes au feu à 1000°C de ces produits sont respectivement de 9,7 et 20,7%.

Le mélange ainsi obtenu après ajustement de l'humidité est mis en forme par extrusion au travers d'une filière.

Dans le cas présent, le matériel est du type à engrenages et les extrudés ont un diamètre de 3 mm pour une longeur moyenne de 8 mm. La teneur en mordénite est de 80% (matière sèche). Les bâtonnets sont séchés dans une étuve à 60°C pendant 3 heures, puis 3 heures à 120°C. Ils sont ensuite traités au four à moufle dans des plateaux à 350°C pendant 2 heures.

La résistance mécanique de ces extrudés mesurée sur cylindres est comprise entre 1,1 et 1,6 kg/mm. 150 $cm^3$ d'extrudés de mordénite sodique sont placés dans un panier en toile d'acier inoxydable (maille 2/10 mm) dont la géométrie est ajustée à celle d'un bécher de 0,5 litre. Leur densité de chargement est voisine de 0,65.

On prépare 500 $cm^3$ d'une solution cuprotétramine à partir de 70 g de $Cu(NO_3)_2$ $6H_2O$ cristallisé dissous dans 100 $cm^3$ d'eau déminéralisée par ajout de 250 $cm^3$ d'ammoniaque concentrée à 25% $NH_3$. On observe tout d'abord la formation d'un précipité d'hydroxyde de cuivre qui, après agitation, disparaît. La solution est bleu limpide. Le cuivre est complexé par $NH_3$ sous forme $Cu(NH_3)_4^{2+}$. On complète avec de l'eau déminéralisée pour avoir un volume de solution de 0,5 litre.

Le panier inox contenant les extrudés est placé dans un bécher de 0,5 litre. On verse 250 $cm^3$ de la solution cuivrique. Son niveau surnage celui des extrudés. L'ensemble est porté à 40°C et la réaction d'échange est maintenue pendant 2 heures. Le panier est ensuite soulevé ; les extrudés sont lavés par trempage dans de l'eau déminéralisée et l'opération d'échange est renouvelée avec 200 $cm^3$ de la solution cuivrique fraîche. Le produit est lavé 3 fois par trempage puis séché à l'étuve à 60°C pendant 3 heures, puis 120°C pendant 2 heures.

La teneur en cuivre des extrudés est de 3% (sur produit sec) ce qui représente, compte tenu d'une teneur en liant $Al_2O_3$ de 20%, un taux d'échange du sodium de 53%.

On peut accroître ce taux d'échange en augmentant soit le nombre des échanges, soit la température de réaction.

EXEMPLE 7

Catalyseur n° 8.

On introduit 150 g de mordénite sodique à petits pores sous forme de poudre (PAF : 9,7%) dans un bécher de 500 $cm^3$ contenant 300 $cm^3$ de solution de cuivre tétramine préparée selon la procédure décrite dans l'exemple 6.

La suspension est agitée avec un barreau aimanté et la température ajustée à 40°C. La durée de l'échange est de 2 heures.

La mordénite partiellement échangée par $Cu^{++}$ est récupérée par filtration sur entonnoir filtrant et lavé avec 1 litre d'eau déminéralisée.

On réalise un 2ème échange dans les mêmes conditions. Le produit après filtration et lavage, est séché à 60°C pendant 2 heures, puis à 120°C pendant 2 heures.

Ce produit est mélangé intimement avec un liant constitué 75% d'argile kaolinite et 25% de bentonite. La teneur en mordénite du produit (sec) est de 80%. Cette poudre est ensuite mise en forme de pastilles de diamètre 3 mm.

Le taux d'échange du sodium par le cuivre est de 48%.

EXEMPLE 8

Catalyseur n° 9.

On utilise 6,9 kg de mordénite à petits pores sous forme ammonium selon la préparation précédemment décrite.

La teneur en sodium est voisine de 400 ppm et la perte au feu (PAF) à 1000°C de 13%.

Le produit est mélangé intimement avec 1,9 kg de gel d'alumine (PAF : 20,7%) puis extrudé à travers une filière de 3 mm de diamètre. La teneur en mordénite est de 80% en poids. On reproduit l'échange tel qu'il a été décrit dans l'exemple 6.

La teneur en cuivre est de 3% ce qui représente un taux d'échange de 53%.

EXEMPLE 9

Cet exemple illustre la mise en oeuvre des catalyseurs préparés selon les procédures décrites dans les trois exemples précédents testés en lit fixe, dans une unité catalytique, dans diverses conditions de fonctionnement ; l'effluent gazeux à traiter provient directement d'une unité industrielle d'acide nitrique.

Le volume de catalyseur mis en oeuvre est de 37,5 cm³, celui-ci est porté à 350°C sous un courant gazeux riche en azote (96% $N_2$-4% $O_2$) de 750 Nl/h à raison d'une montée en température de 100°C/h. Le mélange ($N_2O_2$) est ensuite remplacé par l'effluent à traiter qui est mélangé avec une quantité d'ammoniac fonction de la teneur en oxydes d'azote. Le procédé de réduction est conduit sous une pression variant de 0,104 à 0,45 MPa absolus. La vitesse volumétrique horaire (VVH) exprime le débit de gaz entrant sur le catalyseur en Nl/h divisé par le volume de catalyseur (1). La teneur en $NO_x$ est exprimée en ppmv (partie par million en volume). Elle est de 1500 ppm pour l'ensemble des tests effectués dont les résultats sont présentés ci-après.

La quantité d'ammoniac ajoutée au gaz entrant est exprimée par le rapport molaire $NH_3/NO_x$. La teneur résiduelle d'ammoniac après la réaction est exprimée en ppm. La température indiquée est la température moyenne du lit catalytique. Le rendement de la réduction, exprimé en % correspond au rapport de la différence entre la teneur en $NO_x$ des gaz en entrée et la teneur en $NO_x$ des gaz en sortie, à la teneur en $NO_x$ des gaz en entrée.

TABLEAU V

CATALYSEUR N° 7 : $NO_x$ entrée : 1500 ppm

| T moyen °C | Pabs MPa | VVH $h^{-1}$ | $NH_3/NO_x$ | Rendement % | $NH_3$ sortie ppmv |
|---|---|---|---|---|---|
| 350 | 0,104 | 5 000 | 1,15 | 99,7 | 0 |
| " | " | 10 000 | 1,18 | 98,4 | 0 |
| " | " | 15 000 | 1,15 | 94 | 0 |
| " | 0,3 | 15 000 | 1,16 | 98,5 | 0 |
| " | " | 25 000 | 1,15 | 97,5 | 0 |
| " | " | 35 000 | 1,16 | 94,5 | 2 |
| " | " | 40 000 | 1,15 | 91,6 | 6 |
| " | 0,45 | 20 000 | 1,16 | 99 | 0 |
| " | " | 30 000 | 1,15 | 98 | 0 |
| " | " | 40 000 | 1,15 | 96,1 | 0 |
| " | " | 50 000 | 1,15 | 93,6 | 13 |
| 300 | 0,104 | 5 000 | 1,17 | 98,8 | 0 |
| " | " | 10 000 | 1,14 | 96,8 | 0 |
| " | " | 15 000 | 1,14 | 89 | 0 |
| " | 0,3 | 15 000 | 1,17 | 97,9 | 0 |
| " | " | 25 000 | 1,15 | 93,9 | 3 |
| " | " | 30 000 | 1,15 | 89,6 | 4 |
| " | 0,45 | 15 000 | 1,16 | 98,7 | 0 |
| " | " | 25 000 | " | 97,4 | 0 |
| " | " | 35 000 | " | 94 | 2 |
| " | " | 45 000 | " | 90 | 3 |

TABLEAU VI

CATALYSEUR N°8 : $NO_x$ entrée : 1 500 ppmv

| T moyen °C | Pabs MPa | VVH $h^{-1}$ | $NH_3/NO_x$ | Rendement % | $NH_3$ sortie ppmv |
|---|---|---|---|---|---|
| 350 | 0,104 | 10 000 | 1,18 | 98,8 | 0 |
| " | " | 20 000 | 1,14 | 94 | 0 |
| " | " | 25 000 | 1,14 | 91,5 | 0 |
| " | 0,3 | 15 000 | 1,18 | 99 | 0 |
| " | " | 25 000 | 1,14 | 98 | 0 |
| " | " | 35 000 | 1,15 | 94,2 | 0 |
| " | " | 40 000 | 1,14 | 89,8 | 7 |
| " | 0,45 | 15 000 | 1,16 | 99,2 | 0 |
| " | " | 35 000 | 1,16 | 97,8 | 1 |
| " | " | 50 000 | 1,16 | 95,1 | 5 |
| " | " | 60 000 | 1,16 | 93 | 6 |
| 300 | 0,104 | 10 000 | 1,14 | 97,8 | 0 |
| " | " | 15 000 | 1,15 | 95,2 | 0 |
| " | " | 20 000 | 1,16 | 92 | 6 |
| " | 0,3 | 15 000 | 1,15 | 98,2 | 6 |
| " | " | 25 000 | 1,14 | 94,4 | 15 |
| " | " | 30 000 | 1,16 | 91 | 23 |
| " | 0,45 | 15 000 | 1,13 | 99 | 0 |
| " | " | 35 000 | 1,15 | 97,4 | 20 |
| " | " | 50 000 | 1,13 | 94 | 25 |
| " | " | 60 000 | 1,16 | 91,9 | 70 |

TABLEAU VII

CATALYSEUR N° 9 : $NO_x$ entrée : 1 500 ppmv

| : T moyen : | Pabs : | VVH : | $NH_3/NO_x$ : | Rendement : | $NH_3$ sortie : |
|---|---|---|---|---|---|
| : °C : | MPa : | $h^{-1}$ : | : | % : | ppmv : |
| : : | : | : | : | : | : |
| : 350 : | 0,45 : | 15 000 : | 1,16 : | 99,4 : | 0 : |
| : " : | " : | 35 000 : | 1,14 : | 99 : | 0 : |
| : " : | " : | 50 000 : | 1,14 : | 98,6 : | 0 : |
| : " : | " : | 60 000 : | 1,13 : | 97,1 : | 0 : |
| : 250 : | 0,45 : | 10 000 : | 1,15 : | 98,8 : | 0 : |
| : " : | " : | 20 000 : | 1,16 : | 96,4 : | 0 : |
| : " : | " : | 25 000 : | 1,15 : | 92,9 : | 0 : |
| : | | | | | : |

## Revendications

1. Procédé de réduction catalytique par l'ammoniac des oxydes d'azote ($NO_x$) contenus dans des effluents gazeux oxygénés, utilisant une composition catalytique contenant comme matière active de la mordénite, caractérisé en ce que la mordénite est une mordénite à petits pores sous forme ammonium ou acide, de teneur en sodium résiduel inférieure à 1000 ppm et représente 70 à 95% du poids total de la composition catalytique, le complément étant constitué par un liant.

2. Procédé selon la revendication 1, caractérisé en ce que la mordénite est doublement échangée par des ions ammonium, avec élimination du sodium extrait.

3. Procédé selon la revendication 1 ou 2, caractérisé en ce que la surface spécifique, mesurée selon la méthode BET de la composition sous forme acide, est comprise entre 200 et 300 $m^2/g$ et le diamètre des macropores est compris entre 4 et 1500 nm.

4. Procédé selon l'une des revendications 1 à 3, caractérisé en ce que le liant utilisé est un élément du groupe constitué par l'argile kaolinite ($Si_2Al_2O_5$ ($OH_{>4}$), la bentonite, l'alumine, seul ou en combinaison.

5. Procédé selon l'une des revendications 1 à 4 caractérisé en ce qu'il est mis en oeuvre à une température comprise entre 300 et 550°C, sous une pression d'au moins 0,1 MPa absolu, avec une vitesse volumétrique horaire de circulation des gaz VVH, qui peut atteindre 80000 $h^{-1}$, et un rapport de la concentration en ammoniac à la concentration en oxydes d'azote $NH_3/NO_x$ au plus égal à 1,25.

6. Procédé catalytique de réduction sélective par l'ammoniac des oxydes d'azote ($NO_x$) contenus dans des effluents gazeux oxygénés, utilisant une composition catalytique, contenant comme matière active de la mordénite échangée représentant 70 à 95% du poids total de la composition catalytique, le complément étant constitué par un liant, caractérisé en ce que la mordénite est une mordénite dite à petits pores n'absorbant que les molécules de diamètre cinétique inférieur à $4,4.10^{-10}$ m environ, et cristallisée en aiguilles, échangée par le cation cuivre, représentant entre 1 et 5% du poids total de la composition catalytique.

7. Procédé selon la revendication 6, caractérisé en ce que le cuivre est sous forme complexée par l'ammoniac Cu(NH₃)₄²⁺.

8. Procédé selon la revendication 6 ou 7 caractérisé en ce que le liant est un élément du groupe constitué par l'argile kaolinite (Si₂Al₂O₅ (OH₋₄), l'alumine, seul ou en combinaison.

9. Procédé selon l'une des revendications 6 à 8 caractérisé en ce qui ladite composition est conditionnée sous forme adaptée, telle que pastilles ou extrudés.

10. Procédé selon l'une des revendications 6 à 9 caractérisé en ce qu'il est mis en oeuvre à une température comprise entre 225 et 400°C, sous une pression d'au moins 0.1 MPa absolu avec une vitesse volumétrique horaire de circulation des gaz VVH, qui peut atteindre 80.000 h⁻¹, et un rapport de la concentration en ammoniac à la concentration en oxydes d'azote NH₃/NOₓ au plus égal à 1,25.


## Claims

1. Process for catalytic reduction using ammonia of nitrogen oxides (NOₓ) present in oxygenated gaseous effluents, employing a catalyst composition containing mordenite as active material, characterized in that the mordenite is a small-pored mordenite in ammonium or acidic form, with a residual sodium content lower than 1000 ppm and represents 70 to 95% of the total weight of the catalyst composition, the remainder consisting of a binder.

2. Process according to Claim 1, characterized in that the mordenite is doubly exchanged using ammonium ions, with the removal of the sodium extracted.

3. Process according to Claim 1 or 2, characterized in that the specific surface area, measured according to the BET method, of the composition in acidic form is between 200 and 300 m²/g and the diameter of the macropores is between 4 and 1500 nm.

4. Process according to one of Claims 1 to 3, characterized in that the binder employed is a member of the group consisting of kaolinite clay (Si₂Al₂O₅(OH₋₄), bentonite, alumina, by itself or in combination.

5. Process according to one of Claims 1 to 4, characterized in that it is used at a temperature of between 300 and 550°C at a pressure of at least 0.1 MPa absolute, with an hourly space velocity HSV of gas circulation which can go up to 80,000 h⁻¹, and a ratio of the ammonia concentration to the concentration of nitrogen oxides NH₃/NOₓ not exceeding 1.25.

6. Catalytic process for selective reduction by ammonia of the nitrogen oxides (NOₓ) present in oxygenated gaseous effluents, employing a catalyst composition containing exchanged mordenite as active material representing 70 to 95% of the total weight of the catalyst composition, the remainder consisting of a binder, characterized in that the mordenite is a so-called small-pored mordenite absorbing only molecules with a kinetic diameter smaller than approximately $4.4 \times 10^{-10}$ m and crystallized in the form of needles, exchanged using the copper catalyst, representing between 1 and 5% of the total weight of the catalyst composition.

7. Process according to Claim 6, characterized in that the copper is in a form complexed with ammonia Cu(NH₃)₄²⁺.

8. Process according to Claim 6 or 7 characterized, in that the binder is a member of the group consisting of kaolinite clay (Si₂Al₂O₅(OH₋₄), alumina, by itself or in combination.

9. Process according to one of Claims 6 to 8, characterized in that the said composition is packaged in a suitable form, such as tablets or extrudates.

10. Process according to one of Claims 6 to 9, characterized in that it is used at a temperature of between 225 and 400°C, at a pressure of at least 0.1 MPa absolute with an hourly space velocity HSV of gas circulation which can go up to 80,000 h⁻¹ and a ratio of the concentration of ammonia to the concentration of nitrogen oxides NH₃/NOₓ not exceeding 1.25.


## Patentansprüche

1. Verfahren zur katalytischen Reduktion der in sauerstoffhaltigen gasförmigen Abströmen enthaltenen Stickoxide (NOₓ) durch Ammoniak unter Verwendung einer Mordenit als aktiven Stoff enthaltenden katalytischen Zusammensetzung, **dadurch gekennzeichnet,** daß der Mordenit ein Mordenit mit kleinen Poren in Ammonium- oder Azidform mit einem Restnatriumgehalt unter 1000 ppm ist und 70 bis 95% des Gesamtgewichts der katalytischen Zusammensetzung bildet, deren Rest aus einem Bindemittel besteht.

2. Verfahren nach dem Anspruch 1, **dadurch gekennzeichnet,** daß der Mordenit durch Ammoniumionen mit Entfernung des extrahierten Natriums doppelt ausgetauscht wird.

3. Verfahren nach dem Anspruch 1 oder 2, **dadurch gekennzeichnet,** daß die nach dem BET-Verfahren gemessene spezifische Oberfläche der Zusammensetzung unter Azidform im Bereich von 200 bis 300 m²/g liegt und der Durchmesser der Makroporen im Bereich von 4 bis 1500 nm liegt.

4. Verfahren nach einem der Ansprüche 1 bis 3, **dadurch gekennzeichnet,** daß das verwendete Bindemittel ein Element der Gruppe ist, die von Tonkaolinit ($Si_2Al_2O_5 (OH)_4$), Bentonit, Aluminiumoxid, allein oder in Kombination, gebildet wird.

5. Verfahren nach einem der Ansprüche 1 bis 4, **dadurch gekennzeichnet,** daß es bei einer Temperatur im Bereich von 300 bis 550°C, bei einem Druck von wenigstens 0,1 MPa absolut, mit einer stündlichen volumetrischen Zirkulationsgeschwindigkeit VVH der Gase, die 80000 $h^{-1}$ erreichen kann, und einem Verhältnis der Konzentration an Ammoniak zur Konzentration an Stickoxiden $NH_3 /NO_x$ von höchstens gleich 1,25 durchgeführt wird.

6. Verfahren zur selektiven Reduktion der in sauerstoffhaltigen gasförmigen Abströmen enthaltenen Stick-oxide ($NO_x$) durch Ammoniak unter Verwendung einer katalytischen Zusammensetzung, die als aktiven Stoff ausgetauschten Mordenit enthält, der 70 bis 90% des Gesamtgewichts der katalytischen Zusammensetzung bildet, deren Rest aus einem Bindemittel besteht, **dadurch gekennzeichnet,** daß der Mordenit ein sog. Mordenit mit kleinen Poren ist, der nur die Moleküle eines kinetischen Durchmessers unter etwa $4,4 \cdot 10^{-10}$ m absorbiert und in Nadeln kristallisiert und durch das Kation Kupfer ausgetauscht ist, das zwischen 1 und 5% des Gesamtgewichts der katalytischen Zusammensetzung bildet.

7. Verfahren nach dem Anspruch 6, **dadurch gekennzeichnet,** daß das Kupfer in Komplexbildungsform durch Ammoniak $Cu(NH_3)_4{}^{2+}$ vorliegt.

8. Verfahren nach dem Anspruch 6 oder 7, **dadurch gekennzeichnet,** daß das Bindemittel ein Element der Gruppe ist, die von Tonkaolinit ($Si_2Al_2O_5(OH)_4$), Aluminiumoxid, allein oder in Kombination, gebildet wird.

9. Verfahren nach einem der Ansprüche 6 bis 8, **dadurch gekennzeichnet,** daß die Zusammensetzung in angepaßte Form, wie z.B. Tabletten oder Strangpreßlinge, konditioniert wird.

10. Verfahren nach einem der Ansprüche 6 bis 9, **dadurch gekennzeichnet,** daß es bei einer Temperatur im Bereich von 225 bis 400°C, bei einem Druck von wenigstens 0,1 MPa absolut, mit einer stündlichen volumetrischen Zirkulationsgeschwindigkeit, die 80000 $h^{-1}$ erreichen kann, und einem Verhältnis der Konzentration an Ammoniak zur Konzentration an Stickoxiden $NH_3 /NO_x$ von höchstens 1,25 durchgeführt wird.